# EUROPEAN PATENT SPECIFICATION

(11) **EP 3 099 514 B1**
(45) Date of publication and mention of the grant of the patent: **25.09.2019**
(21) Application number: 14880803.3
(22) Date of filing: 31.01.2014
(51) Int. Cl.: B29D 30/56, B29D 30/54, B60C 1/00, B60C 11/02

(54) **METHOD FOR IMPROVED BONDING OF TREAD EDGES FOR TIRE RETREADING OPERATIONS**
VERFAHREN FÜR VERBESSERTE HAFTUNG VON LAUFFLÄCHENKANTEN FÜR REIFENRUNDERNEUERUNGSOPERATIONEN
PROCÉDÉ DE LIAISON AMÉLIORÉE DE BORDS DE BANDE DE ROULEMENT ASSOCIÉ À DES OPÉRATIONS DE RECHAPAGE DE PNEUMATIQUE

(43) Date of publication of application: 07.12.2016
(73) Proprietor: Compagnie Générale des Etablissements Michelin, 63000 Clermont-Ferrand (FR)
(72) Inventor: IKONOMOV, Metodi L., Greenville, SC 29605 (US); LUNG, David Chan Wah, Greenville, SC 29605 (US); CHEBLI, Adib T., Greenville, SC 29605 (US); MEHLEM, Jeremy, Greenville, SC 29605 (US)
(74) Representative: Casalonga
(86) International application number: PCT/US2014/014178
(87) International publication number: WO 2015/116171

(56) References cited:
- WO-A1-2008/125645
- WO-A1-2013/002823
- US-A- 3 689 337
- US-A- 3 894 897
- US-A- 3 904 459
- US-A- 4 093 481
- US-A- 4 105 482
- US-A- 4 123 306
- US-A- 4 536 242
- US-A- 5 055 148
- US-A1- 2011 056 627
- US-A1- 2012 111 464
- US-A1- 2013 206 311
- US-B1- 6 350 402
- US-B2- 6 818 872

## Description

### BACKGROUND OF THE INVENTION

### Field of the Invention

This invention relates generally to methods for manufacturing retreaded tires, and treads for retreading tires. More specifically, this invention relates to methods for curing a retreaded tire without a curing membrane.

### Description of the Related Art

The present invention relates to a method for retreading tires such as it is, e.g., known from US3904459, US3689337, US4123306, US2011/056627 or US5055148.

A retreaded tire consists of a new pre-cured tread attached to a pre-existing tire carcass. The tire carcass is prepared to receive the new pre-cured tread by removing the prior tread, such as through buffing or abrading operations. The new pre-cured tread is then applied to the tire carcass with a bonding layer comprising bonding material to secure the new tread to the carcass. Subsequently, a flexible curing membrane (or envelope) is arranged at least partially around the tire to create a sealed fluid chamber between the curing membrane and the tire. The combination of a retreaded tire with an installed curing membrane is referred to herein as a tire-membrane assembly.

In operation, multiple tire-membrane assemblies are placed within a tire curing chamber, such as an autoclave. Each tire-membrane assembly is then placed in fluid communication with a vacuum source. The vacuum source substantially removes gas between the tire and the curing membrane. Subsequently, while the tire-membrane assembly is under vacuum pressure, the curing chamber is also heated and positively pressurized, such that a pressure force is applied to the flexible curing membrane. Accordingly, the flexible curing membrane is forced into grooves and other sufficiently sized voids arranged along the top side (*i.e.*, outer or exposed side) of the tread during curing operations.

Because these flexible curing membranes are used to separately cure numerous retreaded tires, the membranes undergo numerous flexing cycles due to the repeated penetration of grooves and sufficiently sized voids arranged along the top side of the tread, which can notably reduce the useful life of the flexible curing membrane. Additionally, the membranes frequently wear out from normal use, due at least in part to repeated motion, exposure to changing or elevated temperature, and pressure changes. Thus, it is desirable to develop more efficient curing processes that do not require consumable curing membranes.

Furthermore, the curing membrane may tend to compress the tread, which may alter the cured dimensions of the tread. Therefore, there is also a need to improve the retreading process by reducing any instabilities or deforming forces acting on or impacting the tread.

### SUMMARY OF THE INVENTION

Particular embodiments of the invention concerns methods of forming a retreaded tire with improved tread edge area bonding. Also disclosed are retreaded tires formed thereby. One embodiment of such methods includes forming an unbonded retreaded tire by arranging a pre-cured tread annularly around an annular tire carcass with a bonding layer arranged there between. The pre-cured tread includes a pair of opposing tread edges laterally-spaced to define a width of the pre-cured tread. The method also includes bonding the tread of the unbonded tire to the tire carcass to form a bonded retreaded tire by sufficiently pressurizing and heating the curing chamber to cure die bonding layer of the unbonded tire, which includes at least partially bonding a pair of laterally-spaced tread edge areas of the pre-cured tread to the tire carcass prior to an intermediate portion of the pre-cured tread located between the pair of laterally-spaced tread edge areas.

### BRIEF DESCRIPTION OF THE DRAWINGS

FIG. **1** is a flow chart describing a method of forming a retreaded tire including various steps in accordance with an embodiment invention.
FIG. **2** is sectional view of an unbonded retreaded tire including edge-bonding material in accordance with an illustrative example not falling under the scope of the claims
FIG. **3** is a partial sectional view of an unbonded retreaded tire in accordance with an embodiment of the invention.
FIG. **4** **is** a plan view of an unbonded retreaded tire being cured in a curing chamber in cooperation with a second heat source in accordance with an embodiment of the present invention.

### DETAILED DESCRIPTION OF PARTICULAR EMBODIMENTS

Particular embodiments of the invention include methods of forming a retreaded tire. Also disclosed is a retreaded tire formed by methods described herein.

Particular embodiments of such methods include forming an unbonded retreaded tire, which includes arranging a pre-cured tread annularly around an outer circumference of an annular tire carcass with a bonding layer comprising uncured bonding material arranged between the pre-cured tread and the annular tire carcass. The tread includes a pair of opposing tread edges laterally-spaced to define a width of the pre-cured tread. The unbonded retreaded tire has a thickness extending between inner and outer sides of the unbonded retreaded tire. The annular tire carcass comprises a pair of sidewalls spaced apart in an axial direction of the tire, each of the pair of sidewalls extending radially inward from an undertread portion to a bead portion. The outer side of the unbonded retreaded tire may also be described as having a first lateral portion and a second lateral portion, which are spaced apart and arranged on opposing axial sides of the tire. Accordingly, the first lateral portion includes a first sidewall and associated bead portion and the second lateral portion includes a second sidewall and associated bead portion. The pair of opposing tread edges form terminal edges of the tread, to thereby define the width of the tread. The width or widthwise direction of the tread extends perpendicular to a length of the tread, which ultimately extends around the outer circumference of the tire in an installed arrangement, where the lengthwise and widthwise directions both extend perpendicular to each other and to a thickness of the tread, which extends in a radial direction of the tire in the installed arrangement. It is appreciated that the unbonded retreaded tire may be assembled by any method known to one of ordinary skill in the art.

Still further embodiments of such methods include bonding the tread of the unbonded retreaded tire to the tire carcass in a curing chamber to form a bonded retreaded tire by pressurizing the curing chamber and sufficiently heating the curing chamber using a chamber heat source to cure the bonding layer of the unbonded retreaded tire. In such instances, the step of curing is performed without use of any flexible curing membrane arranged fully or partially along the unbonded retreaded tire. As such, the tire is arranged within a curing chamber and substantially exposed to pressurized and heated gas(es) contained within a curing chamber. In the curing chamber, heat is generated by a chamber heating source, external to the unbonded retreaded tire. The heating source may comprise any known or useful heat source suitable for its purpose of heating the curing chamber. In particular instances of such embodiments, the pressure to which the curing chamber is pressurized is a sufficiently high pressure, such as at least 6 bar, for example. Other elevated pressures may be employed when curing different tires. It is contemplated that the curing operations can occur while the tire is mounted on a wheel or any other desired mounting structure. Generally, the curing chamber provides a controlled environment where a tire is bonded in accordance with a recipe or formula identifying any combination of one or more pressures and temperatures for certain durations. It is appreciated that bonding operations can be performed within one or more curing chambers. It is also appreciated that the same or different chambers can be used for performing other operations. Embodiments of such techniques are a departure from earlier curing methods that require use of a curing membrane to remain arranged around or engaged with the unbonded retreaded tire during curing operations.

In particular embodiments, the unbonded retreaded tire is cured (that is, the tread is bonded to the tire carcass) without use of a flexible curing membrane subsequent to assembling the unbonded retreaded tire. When doing so, the tread edges may lift and separate from the tire carcass. To resolve these issues, the methods discussed below may be used to facilitate improved bonding of each tread edge and the portion of the tread adjoining each tread edge (referred to collectively as the "tread edge area") to the tire carcass.

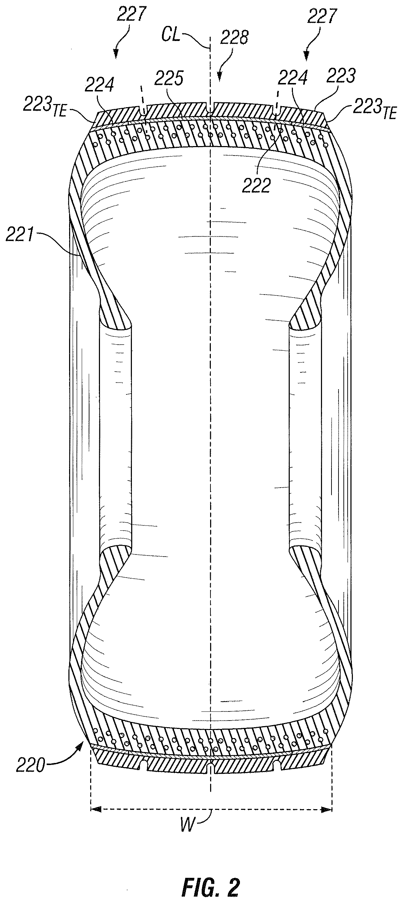

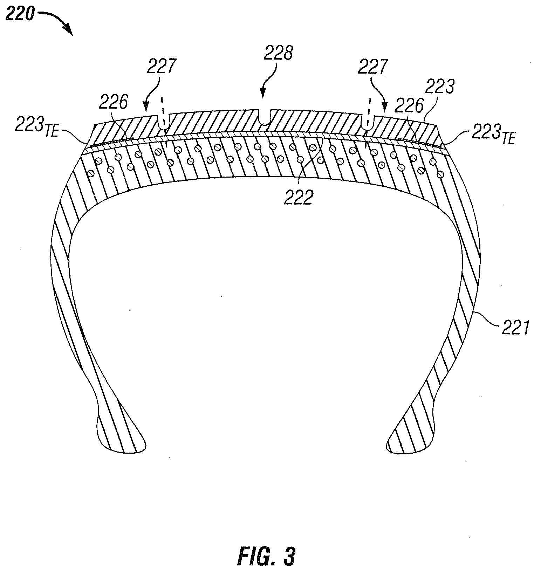

For example, in particular embodiments where the curing chamber is generally heated by a chamber heating source, the step of bonding further includes at least partially bonding a pair of laterally-spaced tread edge areas of the pre-cured tread to the tire carcass prior to an intermediate portion of the pre-cured tread located between the tread edge areas of the tread. Stated another way, the step of bonding further includes at least partially curing bonding material arranged between the tread and the tire carcass at, or adjacent to, each of the tread edge areas prior to at least partially curing bonding material arranged at an intermediate portion of the tread located between the pair of tread edge areas (also referred to as an intermediate portion of the bonding layer). By doing so, tread edge areas associated with each of a pair of opposing edges of the tread are generally bonded to the tire carcass prior to bonding an intermediate portion of the tread between the pair of opposing tread edges, which substantially reduced or eliminates the lifting of the tread edges as the intermediate portion of the bonding layer cures and bonds an intermediate portion of the tread to the tire carcass. It is appreciated at least partially bonded or cured contemplates partial or full bonding or curing. Moreover, it is appreciated that a tread edge area as used herein includes the areas of the tire tread and other areas of the tire, such as areas of the bonding layer and of the tire carcass, arranged in close proximity to a corresponding tread edge of the pre-cured tread. Accordingly, a tread edge area includes the tread edge. In particular embodiments, the tread edge area may extend inward from a tread edge in a lateral or axial direction toward a centerline of the tire tread by a distance up to substantially 0.5 inches (12.7 millimeters) or up to substantially 1 or 2 inches (25.4 or 50.8 mm), for example. (For exemplary reference, see tread edge areas **227** extending a distance from the each tread edge to the dashed lines in FIGS. **2** and **3**). Described differently, the tread edge area may extend inward from a tread edge in a lateral or axial direction toward a centerline of the tread comprise a distance up to substantially 5%, 10%, 20%, or 25% of the tread width, for example. In any event, the distance is less than 50% the tread width. In bonding a tread edge area, it is appreciated that bonding may not be completely achieved, but rather substantially complete to account for imperfections in bonding the tire tread and the tread edge to the tire carcass, where the imperfections may occur at the tread edge or within the tire inward the tread edge.

In particular embodiments of the methods, the prioritized curing of the tread edges, in the step of bonding, is accomplished by heating more quickly or rapidly portions of the bonding layer arranged adjacent to (that is, associated with) each of the pair of laterally-spaced tread edge areas of the tread to a curing temperature relative to an intermediate portions of the bonding layer (or of the tread) arranged between the pair of laterally-spaced tread edge areas. In particular embodiments, this prioritized curing is accomplished by exposing portions of the bonding layer arranged adjacent to each of the pair of laterally-spaced tread edge areas to heat prior to exposing the intermediate portion of the tread or bonding layer to heat in the retreaded tire. In other embodiments, prioritized heating is accomplished by increasing the transfer of heat to portions of the bonding layer associated with the pair of laterally-spaced tread edge areas at any time during the heating process. In any event, any such embodiment may be accomplished by heating portions of the bonding layer associated with each the pair of laterally-spaced tread edge areas by use of a secondary heat source, the secondary heat source directing focused heat local to the bonding layer associated with at least one of the pair of laterally-spaced tread edge areas of the tread. It is appreciated that the secondary heat source may extend fully around a circumference of the tire at a radius corresponding to the edge of the bonding layer. In other variations, where the secondary heat source extends partially around a circumference of the tire: (1) additional secondary heat sources may be employed to, in combination, sufficiently heat the tread edge substantially around the tire; or (2) the tire may configured to rotate to thereby apply sufficient heat around the tire. Rotation of the tire may also be practiced even when the secondary heat source extends substantially around the tire to overcome any effects of gravity when curing the tire in a static arrangement.

It is appreciated that the secondary heat source may comprise any heat source capable of directing heat locally at a tread edge area by conduction, convention, or radiation. For example, in exemplary embodiments, the secondary heat source is an electric heater (that is, an electric resistance or resistive heater), where electrical energy is converted to heat when a source of electricity supplies an electric current to an electrically resistive material comprising a resistor or conductor. It is appreciated that any known electric heater of any form may be employed. For example, an electric heater may comprise flexible silicone rubber, wire, film, or tape. By further example, an electric heater may comprise a coating, where the electrically resistive material may be applied in any known manner. For example, the material may be sprayed or printed onto the tread, the bonding layer, and/or the tire carcass. Accordingly, in particular embodiments, the coating may comprise a preformed layer of material, a sprayed coating, or a printed coating of conductive ink or any other conductive material. It is appreciated that the arrangement of electrically resistive material along any tread edge area extends between a pair of ends to form a break, such that a current may is generated between a pair of electrodes arranged on each side of the break (that is, at each of the pair of ends) to supply the necessary electrical current to heat the electrically resistive material, and thereby the edges of the bonding layer. It is also appreciated that the electric heater may be arranged external or internal to the tire, and more specifically to the tread and to the bonding layer. In other exemplary embodiments, the secondary heat source is a radiant heater, a forced-air heater, a jet heater, a microwave source, an infra red source, an ultrasound source, or an induction heater, each of which may be arranged external to the tire in contacting or spaced apart arrangements. In particular variations, the external heater may form a ring, whereby a pair of ring heaters are provided, where each of the pair of ring heaters are arranged adjacent to (that is, in close relation or in contact with) one of the pair of tread edge areas of the bonding layer or of the tire tread.

In one of the exemplary embodiments where the secondary heat source comprises an electrical heater, in the step of bonding, prioritized curing of the tread edges is accomplished by arranging an electrically resistive material along each of the pair of tread edge areas, where current is passed through the electrically resistive material to heat the bonding layer associated with each of the pair of tread edges relative to the intermediate portion of the bonding layer and/or tread in the step of bonding from a current source. It is appreciated that in arranging the electrically resistive material along each of the pair of tread edge areas, the electrically resistive material may be arranged along any surface of the tread or bonding layer, or within a thickness of the tread or bonding layer. It is also appreciated that the electrically resistive material may form a portion of the bonding layer. While any material may be employed suitable to provide heat to the tread edge area, in particular embodiments, when the electrically resistive material is an electrically resistive coating, the coating is a conductive ink formed of a carbon-based material.

to improve bonding of the tread edge areas, the step of forming includes arranging an edge-bonding material between the pre-cured tread and the tire carcass at each of a pair of opposing tread edge areas, the edge-bonding material being configured to bond each of the pair of tread edge areas to the tire carcass before bonding an intermediate portion of the tread to the tire carcass. By arranging the edge-bonding material at target locations, improved bonding of the tread to the tire carcass is achieved, whereby the tread edges are sufficiently bonded to the tire carcass prior to bonding the intermediate portion of the tire tread. It is appreciated that the edge-bonding material may form a portion of the bonding layer or may be provided in addition to the bonding layer along each of the pair of tread edge areas in any continuous or discontinuous arrangement.

In particular embodiments, the edge-bonding material is a high viscosity material characterized as having sufficient tack and viscosity to facilitate immobilization of the tread during the curing process, where in the step of bonding, the high viscosity material cures to at least partially bond the tread to the tire carcass, maintaining its viscosity, tack, and shape in the process. In such embodiments, the viscosity of the high viscosity bonding material is selected to sufficiently immobilize the tread during curing operations, which facilitates proper bonding of the tread to the tire carcass and prevents the lifting of the edges of the tread. For example, in particular embodiments, the high viscosity bonding material has a viscosity of at least 30 Mooney units. In specific embodiments, the viscosity level can be in excess of 60 Mooney units. In particular embodiments, the high viscosity bonding material is polymeric, such that in the step of bonding, the high viscosity material cures to at least partially bond tread to the tire carcass. It is appreciated that in particular embodiments, the high viscosity bonding material forms the bonding layer or a portion of the bonding layer, such as each of the tread edge areas, for example. It is also appreciated that the high viscosity bonding layer may be arranged between the tread and the tire carcass in addition to the bonding layer, where the high viscosity bonding layer is arranged between the bonding layer and either the pre-cured tread or the tire carcass in each of the pair of opposing tread edge areas.

It is appreciated that the viscosity of the high viscosity bonding material may be greater or less than 30 Mooney units based upon the desired bonded shape of the tread in the circumferential and /or lateral directions and/or based upon the materials from which the tread and the tire carcass are formed. For example, the greater the curvature along which the tread bends circumferentially and/or laterally, it may be more beneficial to further increase the viscosity of the high viscosity bonding material, and vice versa. It is also appreciated that the bonding layer may be formed of different bonding layer materials, where certain portions of the bonding layer in the lateral direction (*i*.*e*., in an axial or widthwise direction) are formed of bonding material having different viscosity, where at least certain portions of the bonding layer are formed of the high viscosity bonding material, which has a higher viscosity than other portions of the bonding layer, whether such other portions are formed of bonding material of normal or higher viscosity. For example, the tread edge areas of the bonding layer may be formed of high viscosity bonding material that is of higher viscosity of than bonding material arranged along an intermediate portion of the bonding layer between the pair of opposing tread edge areas.

While electrically resistive material is considered a second heat source, it can also be considered an edge-bonding material. Accordingly, in particular embodiments, the edge-bonding material is an electrically resistive material, where such material and its use is also described above and elsewhere herein in additional detail. In accordance therewith, in an exemplary embodiment, the edges of the bonding layer are painted with an electrically resistive ink (or coating) that acts as a heater when electrical current flows through it. In a particular method, the ink (or coating) is subjected to an electrical current at the early stage of the curing cycle. The ink heats up and heats the edge of the bonding layer, bringing it to curing temperature quicker than the intermediate portion of the bonding layer. In such a case, a closed loop control system is used to regulate the temperature of the electrically resistive material (or any other secondary heater discussed herein) to the cure temperature. With experimentation, it is also possible to forego the control system and instead heat the edges for a predetermined time based on the type and dimension of the tire and bonding layer material.

In particular embodiments, the edge-bonding material is a material that cures at a more rapid rate than the bonding material arranged along an intermediate portion of the bonding layer arranged between the edge-bonding material. By doing so, the tread edge areas are bonded prior to the intermediate portion, which thereby reduces the possibility of the tread edge areas from separating from the tire carcass, which could deter sufficient bonding between the tread and the tire carcass.

It is appreciated that any of the improvements to the methods to improve bonding of each tread edge area (which includes each tread edge) during the curing process may be combined and practiced in any combination. Moreover, it is appreciated that any edge-bonding material may be a local substitute for the bonding layer in each of the pair of opposing tread edge areas, may comprise the entire bonding layer, in illustrative examples not falling under the scope of the claims or may be arranged between the bonding layer and either the pre-cured tread or the tire carcass in each of the pair of opposing tread edge areas.

Also disclosed herein are bonded retreaded tires produced using the method described above.

Particular embodiments of the methods (and associated systems) discussed above will now be described in further detail below in association with the figures filed herewith exemplifying the performance of the methods in association with particular embodiments of the tread.

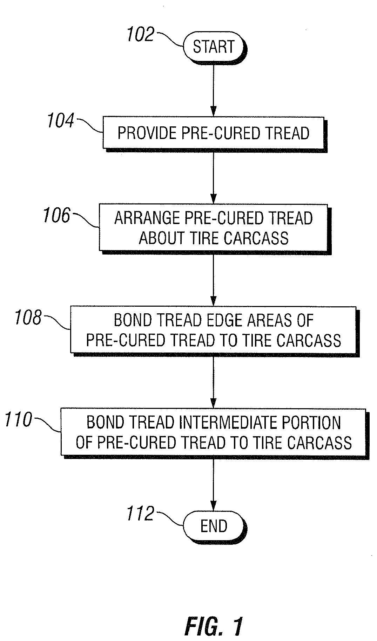

Turning now to FIG. **1**, a flow chart of a method **100** for forming a retreaded tire. Method **100** begins at **102** and proceeds to **104** where a step of providing a pre-cured tread is performed and to **106** for arranging the pre-cured tread about a tire carcass - to form an unbonded retreaded tire as more fully discussed above. After the unbonded retreaded tire is formed, method **100** continues to **108** where a step of bonding the tread edge areas of the tread to the tire carcass is performed as more fully discussed above. Thereafter, at **110** the intermediate portion of the tread is bonded to the tire carcass. By doing so, the tread edge areas are bonded to the tire carcass prior to the intermediate portion of the tire tread so to prevent the tread edge areas from lifting during the bonding step. Subsequent to completing step **110**, method **100** terminates at **112** in the embodiment shown. It is appreciated that different or additional steps, or variations of these steps, may be employed in other embodiments.

Variations of such methods are further discussed above in accordance with different embodiments.

With reference to FIG. **2**, various components of an assembled unbonded retreaded tire **200** is shown in accordance with an illustrative example not falling under the scope of the claims. In particular, unbonded retreaded tire **220** includes at least tire carcass **221**, bonding layer **222**, and tread **223**. Bonding layer **222** includes one or more uncured bonding materials disposed between tire carcass **221** and tread **223**. Tread **223** is a pre-cured tread arranged annularly around an outer circumference of an annular tire carcass. The tread further includes a pair of opposing tread edges **223**_{TE} laterally-spaced relative to centerline **CL** to define a width **W** of the tread. The width or widthwise direction of the tread is shown to extend perpendicular to a length of the tread, which ultimately extends around the outer circumference of the tire in an installed arrangement, and perpendicular to a thickness of the tread, which extends in a radial direction of the tire in the installed arrangement.

In the illustrative example not falling under the scope of the claims of FIG. **2**, the unbonded retreaded tire includes an edge-bonding material **224** arranged between the pre-cured tread and the tire carcass approximately or substantially within each of a pair of opposing tread edge areas **227** each generally located adjacent one of the pair of tread edges **223**_{TE} between the tread and the tire carcass to improve bonding of the tread to the tire carcass, as more fully discussed above. Each tread edge area **227** extends from one of the tread edges **223**_{TE} inward (that is, in a direction of the tread width) toward the tread centerline **CL**, such as to the imaginary dashed lines shown, for example. The area arranged between the pair of opposing tread edge areas **227** is referred to as an intermediate portion or area **228**. It is appreciated that tread edge areas **227** and intermediate portion or area **228** refer to tread edge areas and intermediate portions/areas of the tread or more generally of the tire and its components. As discussed above, in particular illustrative example not falling under the scope of the claims the edge-bonding material **224** is one or more of: a fast curing bonding material, a high viscosity material, an electrically resistive material, or any other material suitable for facilitating bonding of the tread edge area prior to bonding of the intermediate portion of the tread to the tire carcass.

In the illustrative example not falling under the scope of the claims of FIG. **2**, the edge-bonding material **224** operates as a substitute for the bonding layer material at each of the tread edge areas in the bonding layer **222**, such that the edge-bonding material forms a portion of the bonding layer **222.** It is appreciated that the portion of the bonding layer **222** arranged between edge-bonding material portions **224** is referred to as an intermediate portion **225** of the bonding layer. As discussed above, in other variations, the edge-bonding material **224** may instead be arranged between the bonding layer **222** and the tread **223** and/or the tire carcass **221**. For example, with reference to FIG. **3**, which shows an additional element **226** arranged between the tire tread **223** and the tire carcass **221**, and more specifically between bonding layer **222** and the tread **223**. It is appreciated that element **226** may represent either an edge-bonding material or a secondary heat source (discussed further below) arranged internal to the tire along each of the pair of laterally-spaced tread edge areas. It is also appreciated that additional segments of the edge-bonding material may be arranged across the tread width or atop or below the edge-bonding material shown to form layers of edge-bonding material.

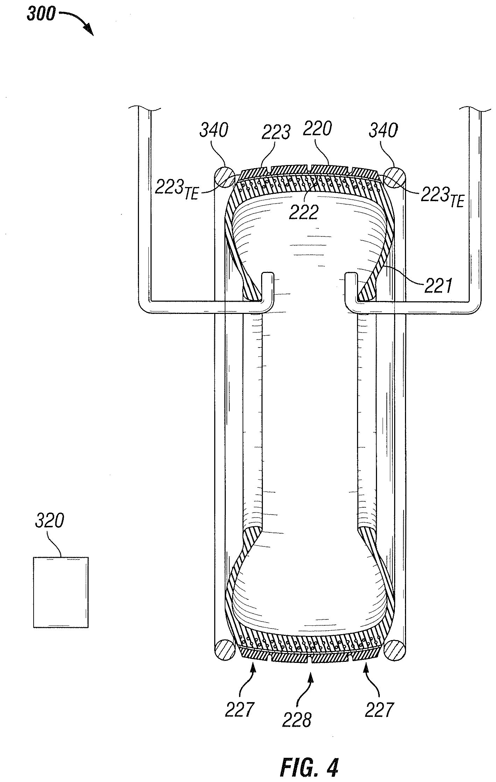

As discussed above, with reference now to FIG. **4**, where an unbonded retreaded tire is arranged within a curing chamber **300** during curing or bonding operations, the curing chamber is generally heated by a chamber heating source **320.** However, in particular embodiments, where a pair of laterally-spaced tread edge areas of the tread are at least partially bonded to the tire carcass prior to an intermediate portion of the tread located between the tread edge areas, a secondary heat source **340** is arranged adjacent to or in close proximity to each tread edge area to facilitate this prioritized bonding whereby each of the pair of laterally-spaced tread edge areas of the tread or bonding layer are heated to a curing temperature quicker than the intermediate portion of the tread or bonding layer. In accordance with an exemplary embodiment shown in FIG. **4**, each the pair of laterally-spaced tread edge areas are heated by the secondary heat source **340** (in addition to chamber heating source **320**), the secondary heat source directing focused heat local to at least one of the pair of laterally space-apart tread edge areas of the tread or of the bonding layer. It is understood that in particular embodiments, the secondary heat source extends substantially around a circumference of the tire, while in other embodiments, a plurality of secondary heat sources may be employed to, in combination, sufficiently heat the tread edge substantially around the tire or the tire may be configured to rotate to thereby apply sufficient heat around the tire. It is appreciated that the secondary heat source may comprise any heat source capable of directing heat locally at a tread edge area. For example, in exemplary embodiments, the secondary heat source is a radiant heater, resistive contact heater, electrically resistive ink heater, electrically resistive coating heater, a forced-air heater, a jet heater, a microwave source, a infra red source, a ultrasound source, an induction heater, or other source discussed above or source that is suitable for its intended purpose. It is noted that the heat source is shown to be arranged external to the tire in FIG. **4**. In other embodiments, it is contemplated that the secondary heat source is arranged internal to the tire. For example, element **226** in FIG. **3** represents a secondary heat source arranged internal to the tire **220**. While an internal secondary heat source **226** may comprise any desired heat source suitable for its intended purpose or a source, in particular embodiments, as more fully discussed above, an internal secondary heat source comprises an electric heater.

The present invention may be utilized in association with retreaded tires, which may be utilized on particular types of vehicles or in specific applications. Nevertheless, the present invention may be utilized in association with any type of tire to form new or retreaded tire and as such, any type of tire may provide an embodiment of the present invention. Exemplary tire types for use with the subject invention further include light truck tires, heavy truck tires, off the road tires, bus tires, aircraft tires, bicycle tires, motorcycle tires, and passenger vehicle tires.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (*i*.*e*., not required) feature of the invention. Ranges that are described as being "between a and b" are inclusive of the values for "a" and "b" unless otherwise specified.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments otherwise discussed or contemplated herein unless otherwise stated. As used herein, the term process or method refers to one or more steps that may be performed in any order without departing from the scope of the invention. Also, some steps may be optional and may be omitted.

## Claims

1. A method (100) of forming a retreaded tire comprising:
forming an unbonded retreaded tire (220), which includes arranging a pre-cured tread (223) annularly around an outer circumference of an annular tire carcass (221) with a bonding layer (222) comprising uncured bonding material arranged between the pre-cured tread (223) and the annular tire carcass (221), the pre-cured tread (223) including a pair of opposing tread edges (223TE) laterally-spaced to define a width (W) of the pre-cured tread (223), where each tread edge (223TE) of the pair of opposing tread edges (223TE) together with a portion of the tread (223) adjoining each such tread edge (223TE) forms a tread edge area (227) to provide a pair of laterally-spaced tread edge areas (227) of the pre-cured tread (223) and an edge bonding material (224) is arranged between the pre-cured tread (223) and the annular tire carcass (221) at each of the pair of laterally-spaced tread edge areas (227) in addition to the bonding layer (222) along each of the pair of laterally-spaced tread edge areas (227) where the edge bonding material (224) is configured to bond each of the pair of laterally-spaced tread edge areas (227) to the annular tire carcass (221) before bonding an intermediate portion (228) of the pre-cured tread (223) to the annular tire carcass (221); and
bonding the pre-cured tread (223) of the unbonded retreaded tire (220) to the annular tire carcass (221) in a curing chamber (300) to form a bonded retreaded tire (220) by pressurizing the curing chamber (300) and sufficiently heating the curing chamber (300) using a chamber heating source (320) to cure the bonding layer (222) of the unbonded retreaded tire (220) while the unbonded retreaded tire (220) is arranged in fluid communication with pressurized and heated gas contained within the curing chamber (300), where the step of bonding includes at least partially bonding the pair of laterally-spaced tread edge areas (227) of the pre-cured tread (223), to the annular tire carcass (221) prior to an intermediate portion (228) of the pre-cured tread (223) located between the pair of laterally-spaced tread edge areas (227) of the pre-cured tread (223).

2. The method (100) of claim 1, where in the step of bonding each of the pair of laterally-spaced tread edge areas (227) of the bonding layer (222) are heated to a curing temperature quicker than the intermediate portion (228) of the bonding layer (222).

3. The method (100) of claim 1, where each of the pair of laterally-spaced tread edge areas (227) are heated by a secondary heat source (340), the secondary heat source (340) directing focused heat local to at least one of the pair of laterally-spaced tread edge areas (227), and where the secondary heat source (340) is arranged internal to the unbonded retreaded tire (220).

4. The method (100) of claim 1, where an electrically resistive material is locally arranged at each of the pair of laterally-spaced tread edge areas (227) and supplied with an electric current to locally heat each of the pair of opposing tread edges (223TE) relative to the transfer of heat to the intermediate portion (228).

5. The method (100) of claim 4, where the electrically resistive material is a coating or a conductive ink.

6. The method (100) of claim 4, where the electrically resistive material is a carbon-based material.

7. The method (100) of claim 4, where the electrically resistive material is arranged internal to the unbonded retreaded tire (220).

8. The method (100) of claim 1, where the edge-bonding material (224) is a high viscosity material with a sufficient tack and viscosity to facilitate an immobilization of the pre-cured tread (223) during a curing process, where in the step of bonding, the high viscosity material cures to at least partially bond the pre-cured tread (223) to the annular tire carcass (221), while maintaining its viscosity, tack, and shape.

9. The method (100) of claim 8, where the high-viscosity material has a viscosity of at least 30 Mooney units.

10. The method (100) of claim 1, where the edge-bonding material (224) is arranged between the bonding layer (222) and either the pre-cured tread (223) or the annular tire carcass (221) in each of the pair of opposing tread edge areas (227).

11. The method (100) of claim 1, where the edge-bonding material (224) is an electrically resistive material such that in the step of bonding, an electrical current is supplied to locally heat each of the pair of opposing tread edge areas (227) relative to the intermediate portion (228).

12. The method (100) of claim 11, where the electrically resistive material is a coating or a conductive ink.

13. The method (100) of claim 1, where the edge-bonding material (224) is a material that cures at a more rapid rate than a bonding material arranged along an intermediate portion (228) of the bonding layer (222) arranged between the edge-bonding material (224).

## Patentansprüche

1. Verfahren (100) zur Bildung eines runderneuerten Reifens, mit den folgenden Schritten:
Bilden eines unverbundenen runderneuerten Reifens (220), bei dem eine vorgehärtete Lauffläche (223) ringförmig um einen Außenumfang einer ringförmigen Reifenkarkasse (221) herum angeordnet wird, wobei eine Bindeschicht (222) ein ungehärtetes Verbindungsmaterial umfasst, das zwischen der vorgehärteten Lauffläche (223) und der ringförmigen Reifenkarkasse (221) angeordnet ist, wobei die vorgehärtete Lauffläche (223) zwei einander gegenüberliegende Laufflächenkanten (223TE) aufweist, die seitlich voneinander beabstandet sind, um eine Breite (W) der vorgehärteten Lauffläche (223) zu definieren, wobei jede Laufflächenkante (223TE) der beiden einander gegenüberliegenden Laufflächenkanten (223TE) zusammen mit einem Abschnitt der an jede solche Laufflächenkante (223TE) angrenzenden Lauffläche (223) einen Laufflächenkantenbereich (227) bildet, um zwei seitlich voneinander beabstandete Laufflächenkantenbereiche (227) der vorgehärteten Lauffläche (223) bereitzustellen, und ein Kantenverbindungsmaterial (224) zwischen der vorgehärteten Lauffläche (223) und der ringförmigen Reifenkarkasse (221) in jedem der beiden seitlich voneinander beabstandeten Laufflächenkantenbereiche (227) zusätzlich zu der Bindeschicht (222) entlang eines jeden der beiden seitlich voneinander beabstandeten Laufflächenkantenbereiche (227) angeordnet ist, wobei das Kantenverbindungsmaterial (224) dazu ausgebildet ist, einen jeden der beiden seitlich voneinander beabstandeten Laufflächenkantenbereiche (227) mit der ringförmigen Reifenkarkasse (221) zu verbinden, bevor ein mittlerer Abschnitt (228) der vorgehärteten Lauffläche (223) mit der ringförmigen Reifenkarkasse (221) verbunden wird; und
Verbinden der vorgehärteten Lauffläche (223) des unverbundenen runderneuerten Reifens (220) mit der ringförmigen Reifenkarkasse (221) in einer Härtekammer (300), um einen verbundenen runderneuerten Reifen (220) zu bilden, indem die Härtekammer (300) mit Druck beaufschlagt wird und die Härtekammer (300) unter Verwendung einer Kammerheizquelle (320) ausreichend erwärmt wird, um die Bindeschicht (222) des unverbundenen runderneuerten Reifens (220) zu härten, während der unverbundene runderneuerte Reifen (220) in Fluidverbindung mit unter Druck stehendem und erhitztem Gas angeordnet ist, das in der Härtekammer (300) enthalten ist, wobei bei dem Schritt des Verbindens die beiden seitlich voneinander beabstandeten Laufflächenkantenbereiche (227) der vorgehärteten Lauffläche (223) vor einem zwischen den beiden seitlich voneinander beabstandeten Laufflächenkantenbereichen (227) der vorgehärteten Lauffläche (223) befindlichen mittleren Abschnitt (228) wenigstens teilweise mit der ringförmigen Reifenkarkasse (221) verbunden werden.

2. Verfahren (100) nach Anspruch 1, wobei bei dem Schritt des Verbindens jeder der beiden seitlich voneinander beabstandeten Laufflächenkantenbereiche (227) der Bindeschicht (222) schneller als der mittlere Abschnitt (228) der Bindeschicht (222) auf eine Härtungstemperatur erwärmt wird.

3. Verfahren (100) nach Anspruch 1, wobei die beiden seitlich voneinander beabstandeten Laufflächenkantenbereiche (227) jeweils durch eine sekundäre Wärmequelle (340) erwärmt werden, wobei die sekundäre Wärmequelle (340) Wärme gezielt zu mindestens einem der beiden seitlich voneinander beabstandeten Laufflächenkantenbereiche (227) lenkt, und wobei die sekundäre Wärmequelle (340) im Inneren des unverbundenen runderneuerten Reifens (220) angeordnet ist.

4. Verfahren (100) nach Anspruch 1, wobei ein Material mit elektrischem Widerstand lokal an jedem der beiden seitlich voneinander beabstandeten Laufflächenkantenbereiche (227) angeordnet ist und mit elektrischem Strom versorgt wird, um jede der beiden einander gegenüberliegenden Laufflächenkanten (223TE) verglichen mit der Übertragung von Wärme zu dem mittleren Abschnitt (228) lokal zu erwärmen.

5. Verfahren (100) nach Anspruch 4, wobei das Material mit elektrischem Widerstand eine Beschichtung oder eine leitfähige Tinte ist.

6. Verfahren (100) nach Anspruch 4, wobei das Material mit elektrischem Widerstand ein Material auf Kohlenstoffbasis ist.

7. Verfahren (100) nach Anspruch 4, wobei das Material mit elektrischem Widerstand im Inneren des unverbundenen runderneuerten Reifens (220) angeordnet ist.

8. Verfahren (100) nach Anspruch 1, wobei das Kantenverbindungsmaterial (224) ein hochviskoses Material mit einer ausreichenden Klebrigkeit und Viskosität ist, um eine Immobilisierung der vorgehärteten Lauffläche (223) während eines Härtungsvorgangs zu erleichtern, wobei bei dem Schritt des Verbindens das hochviskose Material aushärtet, um die vorgehärtete Lauffläche (223) wenigstens teilweise mit der ringförmigen Reifenkarkasse (221) zu verbinden, während es seine Viskosität, Klebrigkeit und Form beibehält.

9. Verfahren (100) nach Anspruch 8, wobei das hochviskose Material eine Viskosität von mindestens 30 Mooney-Einheiten hat.

10. Verfahren (100) nach Anspruch 1, wobei das Kantenverbindungsmaterial (224) zwischen der Bindeschicht (222) und entweder der vorgehärteten Lauffläche (223) oder der ringförmigen Reifenkarkasse (221) in jedem der beiden einander gegenüberliegenden Laufflächenkantenbereiche (227) angeordnet ist.

11. Verfahren (100) nach Anspruch 1, wobei das Kantenverbindungsmaterial (224) ein Material mit elektrischem Widerstand ist, sodass bei dem Schritt des Verbindens ein elektrischer Strom zugeführt wird, um jeden der beiden einander gegenüberliegenden Laufflächenkantenbereiche (227) verglichen mit dem mittleren Abschnitt (228) lokal zu erwärmen.

12. Verfahren (100) nach Anspruch 11, wobei das Material mit elektrischem Widerstand eine Beschichtung oder eine leitfähige Tinte ist.

13. Verfahren (100) nach Anspruch 1, wobei das Kantenverbindungsmaterial (224) ein Material ist, das schneller aushärtet als ein Verbindungsmaterial, das entlang eines zwischen dem Kantenverbindungsmaterial (224) angeordneten mittleren Abschnitts (228) der Verbindungsschicht (222) angeordnet ist.

## Revendications

1. Procédé (100) de formation d'un pneu rechapé, comprenant :
la formation d'un pneu rechapé non lié (220), ce qui comprend l'agencement d'une bande de roulement prévulcanisée (223) de façon annulaire autour d'une circonférence extérieure d'une carcasse de pneu annulaire (221) avec une couche de liaison (222) comprenant un matériau de liaison non cuit agencée entre la bande de roulement prévulcanisée (223) et la carcasse de pneu annulaire (221), la bande de roulement prévulcanisée (223) comportant une paire de bords de bande de roulement opposés (223TE) latéralement espacés qui définissent une largeur (W) de la bande de roulement prévulcanisée (223), chaque bord de bande de roulement (223TE) de la paire de bords de bande de roulement opposés (223TE) formant, conjointement avec une portion de la bande de roulement (223) contiguë à ce bord de bande de roulement (223TE), une zone de bord de bande de roulement (227) afin de procurer une paire de zones de bord de bande de roulement latéralement espacées (227) de la bande de roulement prévulcanisée (223), et un matériau de liaison de bord (224) étant agencé entre la bande de roulement prévulcanisée (223) et la carcasse de pneu annulaire (221) au niveau de chacune des deux zones de bord de bande de roulement latéralement espacées (227) en plus de la couche de liaison (222) le long de chacune des deux zones de bord de bande de roulement latéralement espacées (227), le matériau de liaison de bord (224) étant conçu pour lier chacune des deux zones de bord de bande de roulement latéralement espacées (227) à la carcasse de pneu annulaire (221) avant la liaison d'une portion intermédiaire (228) de la bande de roulement prévulcanisée (223) à la carcasse de pneu annulaire (221) ; et
la liaison de la bande de roulement prévulcanisée (223) du pneu rechapé non lié (220) à la carcasse de pneu annulaire (221) dans une chambre de cuisson (300) pour former un pneu rechapé lié (220) par mise sous pression de la chambre de cuisson (300) et chauffage suffisant de la chambre de cuisson (300) à l'aide d'une source de chauffage de chambre (320) pour cuire la couche de liaison (222) du pneu rechapé non lié (220) pendant que le pneu rechapé non lié (220) est mis en communication fluidique avec du gaz sous pression et chauffé contenu dans la chambre de cuisson (300), l'étape de liaison comprenant la liaison au moins partielle de la paire de zones de bord de bande de roulement latéralement espacées (227) de la bande de roulement prévulcanisée (223) à la carcasse de pneu annulaire (221) avant une portion intermédiaire (228) de la bande de roulement prévulcanisée (223) située entre les deux zones de bord de bande de roulement latéralement espacées (227) de la bande de roulement prévulcanisée (223).

2. Procédé (100) selon la revendication 1, dans lequel à l'étape de liaison, chacune des deux zones de bord de bande de roulement latéralement espacées (227) de la couche de liaison (222) est chauffée jusqu'à une température de cuisson plus rapidement que la portion intermédiaire (228) de la couche de liaison (222).

3. Procédé (100) selon la revendication 1, dans lequel chacune des deux zones de bord de bande de roulement latéralement espacées (227) est chauffée par une source de chaleur secondaire (340), la source de chaleur secondaire (340) dirigeant de la chaleur concentrée localement vers au moins une des deux zones de bord de bande de roulement latéralement espacées (227), et dans lequel la source de chaleur secondaire (340) est agencée à l'intérieur du pneu rechapé non lié (220).

4. Procédé (100) selon la revendication 1, dans lequel un matériau électriquement résistif est agencé localement au niveau de chacune des deux zones de bord de bande de roulement latéralement espacées (227) et se voit appliquer un courant électrique pour chauffer localement chacun des deux bords de bande de roulement opposés (223TE) par rapport au transfert de chaleur à la portion intermédiaire (228).

5. Procédé (100) selon la revendication 4, dans lequel le matériau électriquement résistif est un revêtement ou une encre conductrice.

6. Procédé (100) selon la revendication 4, dans lequel le matériau électriquement résistif est un matériau à base de carbone.

7. Procédé (100) selon la revendication 4, dans lequel le matériau électriquement résistif est agencé à l'intérieur du pneu rechapé non lié (220).

8. Procédé (100) selon la revendication 1, dans lequel le matériau de liaison de bord (224) est un matériau à viscosité élevée présentant une adhésivité et une viscosité suffisantes pour faciliter l'immobilisation de la bande de roulement prévulcanisée (223) durant un processus de cuisson, dans lequel à l'étape de liaison, le matériau à viscosité élevée cuit pour lier au moins partiellement la bande de roulement prévulcanisée (223) à la carcasse de pneu annulaire (221), tout en conservant sa viscosité, son adhésivité et sa forme.

9. Procédé (100) selon la revendication 8, dans lequel le matériau à viscosité élevée présente une viscosité d'au moins 30 unités Mooney.

10. Procédé (100) selon la revendication 1, dans lequel le matériau de liaison de bord (224) est agencé entre la couche de liaison (222) et soit la bande de roulement prévulcanisée (223) soit la carcasse de pneu annulaire (221) dans chacune des deux zones de bord de bande de roulement opposées (227).

11. Procédé (100) selon la revendication 1, dans lequel le matériau de liaison de bord (224) est un matériau électriquement résistif de sorte qu'à l'étape de liaison, un courant électrique est appliqué pour chauffer localement chacune des deux zones de bord de bande de roulement opposées (227) par rapport à la portion intermédiaire (228).

12. Procédé (100) selon la revendication 11, dans lequel le matériau électriquement résistif est un revêtement ou une encre conductrice.

13. Procédé (100) selon la revendication 1, dans lequel le matériau de liaison de bord (224) est un matériau qui cuit à une plus grande vitesse qu'un matériau de liaison agencé le long d'une portion intermédiaire (228) de la couche de liaison (222) agencée entre le matériau de liaison de bord (224).
